# EUROPEAN PATENT APPLICATION

(11) **EP 1 187 115 A1**
(43) Date of publication of application: **13.03.2002**
(21) Application number: 00402505.2
(22) Date of filing: 12.09.2000
(51) Int. Cl.: G11B 7/12, G11B 17/04

(54) **Optical storage device with integrated cleaner for the optical pick-up**

(71) Applicant: Thomson Licensing S.A., 92648 Boulogne Cedex (US)
(72) Inventor: Borgonovo, Alberto, Hong Kong (CN)
(74) Representative: Rossmanith, Manfred, Dr.

(57) **Abstract**

In devices for reading and/or writing on optical storage media it is important to provide means for cleaning the components of the optical pick-up that are exposed to environmental dust. This is especially important for devices that comprise a door for loading and unloading of storage media, as in these devices the pick-up is directly accessible to the user. The invention relates to an optical storage device 1 wherein a cleaning element 22 is operated by the door 2 for loading and unloading of storage media.

## Description

The present invention relates to a device for reading and/or writing on optical storage media. In particular the invention is related to a device according to the introductory part of claim 1.

Devices for reading and/or writing on optical storage media usually comprise an optical pick-up system with several optical components. Examples for these devices are conventional CD- or DVD players as well as CD or DVD ROM drives in computers. Due to dust in the environment or on the storage medium itself, it may happen that optical components of the pick-up exposed to the environment are covered by dust. In consequence, light is reflected or scattered and a reliable operation of the device is hampered. Therefore, it is necessary to provide means for cleaning said optical components.

There are already several techniques known in the art to provide cleaning means for optical storage devices. In JP-A 101164437 a storage device is disclosed having a tray for loading and unloading of storage media wherein said tray carries a cleaning member. The cleaning requires that the lens is driven beneath said cleaning member so that the lens gets in contact with the cleaning member. Then the pick-up is made to pass forth and back in order to clean the lens. In JP-A 03268265, a device comprising two lever arms with brushes at each end is disclosed. Said lever arms are moved to the position of the lens to be cleaned by insertion of a disc cartridge.

For devices that do not comprise any cleaning means itself a cleaning disc as disclosed in US-A-5,043,968 can be used. Such a disc has a similar size to the used storage medium but provides on its surface cleaning means that are capable to remove dust from the lens of a pick-up when the disc is turning.

All known techniques for cleaning the optical components have in common that apart from the cleaning element additional mechanical parts or special operations of the pick-up are necessary that result in higher development and production costs of the device.

It is therefore desirable to have a device for reading and/or writing on optical storage media alleviating the described problem.

Such a desired device is provided by the invention described in claim 1. According to the invention the door for loading and unloading of storage media operates the cleaning element.

The inventive arrangement is mechanically simple and reliable. In one embodiment of the invention a brush being attached to the door forms the cleaning element. The brush can be fixed solidly to the door but it can also be detachably mounted on a protrusion. The protrusion can be attached to the door or can be formed as one piece with the door, which allows cost efficient manufacturing.

In another embodiment of the invention the cleaning element is made out of an electrostatic material attracting dust settled on the optical components of the pick-up. In this case the dimensions of the cleaning element are selected such that it does not physically touch any optical member e.g. the lens of the laser.

In a further embodiment the cleaning element is equipped with an electrically conducting material that is connected to ground. In this case the cleaning element can be arranged in a way to touch the objective lens of the laser to remove firstly any dust from the lens and secondly discharges the lens to prevent the subsequent re-attraction of dust onto the lens.

Further advantages of the invention will become apparent when reading the detailed description.

For a better understanding of the invention an exemplary embodiment is described with reference to the attached drawing.

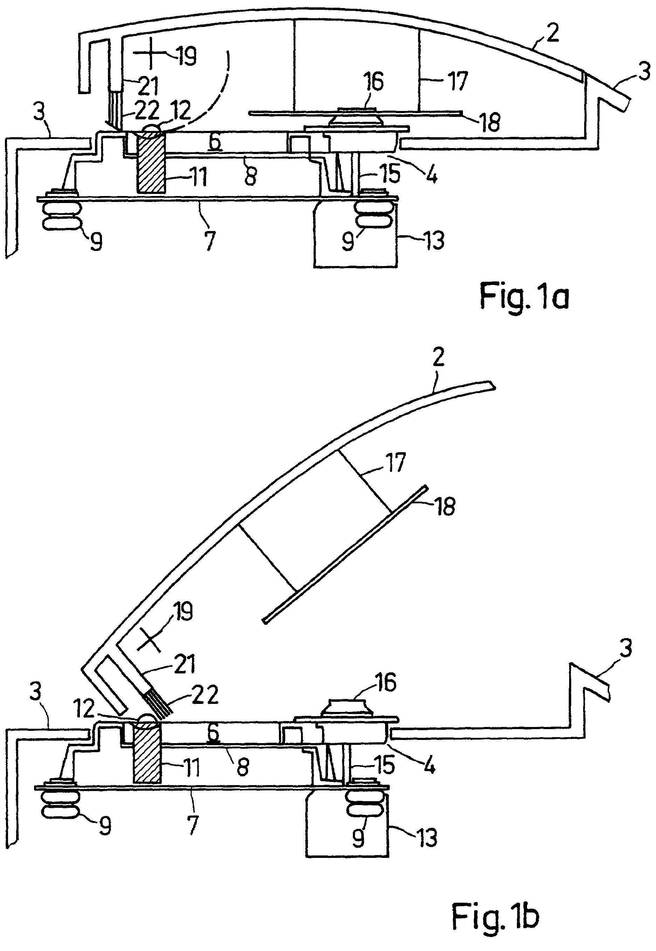

Fig. 1a shows a partial cross sectional view of a CD-player having a door according to the invention, wherein the door is in a closed state and
Fig. 1b shows the CD-player of Fig. 1 with the door in an open state.

Fig. 1a exhibits a schematic and partial cross sectional view of a CD-player 1 with a door 2 for loading and unloading of storage media as an exemplary embodiment of the invention. The storage medium in this case would be a regular CD. The player comprises a housing 3 protecting electrical, optical and mechanical components against damages. At the same time the housing 3 protects the user from hazardous electrical shocks.

The problem of dust or dirt covering the optical components e.g. the lens of the pick-up are particularly pertinent for devices having a hinged door instead of a tray or drawer for loading or unloading a disk. In the former devices the optical components are unprotected against contamination from the environment when the door is open, and dust is even attracted due to electrostatic effects that are caused by some of the materials (e.g. plastic) or electrical components used in the product.

The housing 3 of the CD-player is only shown partially. The housing 3 has an opening 4 to accommodate a pick-up 6. The pick-up 6 comprises a base plate 7 on which a guiding element 8 is mounted. The guiding element 8 is fixed by dampers 9 on the base plate 7 and allows a translational movement of an optical sensor arrangement 11 carrying a lens 12. The arrangement 11 includes a laser emitting a light beam through the lens 12 in upward direction in Fig. 1a. The base plate 7 is connected to the housing 3 (not shown) and the dampers 9 work as a mechanical isolation of the guiding element 8 to avoid malfunction of the player due to jolts or vibrations exerted onto the housing 3.

A motor 13 is arranged on the lower main face of the base plate 7. The motor 13 is drivingly connected to a turntable 14 by a shaft 15. The turntable 13 has a cone 16 on the side that carries the CD for centering the CD on the table. A holder 17 is arranged on the inner side of the door 2, wherein on the holder 17 a puck 18 is rotably mounted. The puck 18 is biased resiliently against the cone 16 to press an inserted CD lying on the turntable 14.

The door 2 is pivotally mounted in the housing 3 and pivots around an axis indicated at 19 in Fig. 1a. In the vicinity of the axis 19 the door 2 carries on its inside a protrusion 21. A brush 22 is fixed on the front end of the protrusion 21 either solidly or detachable. The length of the brush 22 is selected that it contacts the lens 12 when the door 2 is pivoting around axis 19 during opening and when the optical sensor arrangement 11 is in the most distant position from the turntable 14. The open position of door 2 is shown in Fig. 1b.

According to the invention, the brush 22 forming the cleaning element is operated as follows:

If the door is opened as can be seen in Fig. 1b, the brush 22 is moved along a curved line passing the lens 12 to be cleaned. Each time the user will open or close the door of the device, the brush 22 will be turned together with the door and remove dust from the lens 12. If the door is closed again, the brush 22 is in a parking position outside the operation area of the optical pick-up 10 where the brush 22 cannot interfere neither with the pick-up 6 nor with the storage medium during read or write operations of the device.

As the door 2 operates the cleaning element 22, no additional mechanical or electromechanical components like levers or motors are needed for the operation of the cleaning element. Therefore, production costs are reduced and no maintenance of mechanical parts will be necessary. Besides, the cleaning element 22 is operated independently from the pick-up 6 so that neither any adjustment of the cleaning device to pick-up 6 has to be done nor any additional soft- or hardware has to be provided to operate the cleaning element 5. Thus, the invention can be implemented in a very cheap and easy way. This is especially important for devices having a door for loading and unloading of storage media, as on the one hand the pick-up in these devices is directly accessible to the user and thus exposed to environmental dust, but on the other hand, these devices are preferably used in low cost products for that the implementation of expensive cleaning means is not desired at all.

It is another advantage of the invention, that the lens 12 of the pick-up 6 is automatically cleaned before the first use of the device after production so that all dust resulting from the production or the transport of the device is removed. This may limit the requirements for preventing pick-up from dust during production and transport.

The fact that the invention comprises a cleaning element 5 that is directly accessible to the user allows to implement further advantageous features like a special cleaning element whose ability to clean is enhanced by suitable liquids or a special holder that supports a replacement of the cleaning element.

In the special embodiment of the invention shown in Figs. 1a and 1b a brush is used as cleaning element. However, the cleaning element can consist of any other material being suitable for cleaning a lens like pieces of cloth, plastic, paper etc. The cleaning element can be designed to physically touch the optical sensor arrangement 11 or not to touch it. The latter case may be advantageous for an electrostatic material that is able to remove dust only by electrostatic action without touching the optical sensor arrangement 11.

In general, the invention can be applied on all devices that use pick-ups and where the loading and unloading of the storage medium is made by opening and closing a door. This kind of loading system for optical storage media like CD, DVD, VCD, MD, etc. is widely used in various consumer products such as portable CD players, Audio / Video Systems, Computer devices, etc.

While a certain embodiment of the invention has been described and illustrated, it is to be distinctly understood that the invention is not limited thereto but may be otherwise embodied and practiced within the scope of the following claims.

## Claims

1. Device for reading and/or writing on optical storage media comprising a door (2) for loading and unloading of storage media **characterized in that** said door (2) operates a cleaning element (22).

2. Device according to claim 1, **characterized in that** the cleaning element (22) is moved along a curved track during operation of the door (2).

3. Device according to claim 1, **characterized in that** the cleaning element (22) comprises a brush and, means for attaching the brush to the door (2).

4. Device according to any of the preceding claims, **characterized in that** the cleaning element (22) or parts of it are detachable from the door (2).

5. Device according to claim 1, **characterized in that** the cleaning element (22) comprises an electrostatic material.

6. Device according to claim 4, **characterized in that** the cleaning element (22) does not touch the optical system.

7. Device according to claim 1, **characterized in that** parts of the cleaning element (22) are electrically connected to ground.
